# EUROPEAN PATENT SPECIFICATION

(11) **EP 1 696 682 B1**
(45) Date of publication and mention of the grant of the patent: **28.05.2008**
(21) Application number: 05101482.7
(22) Date of filing: 25.02.2005
(51) Int. Cl.: H04Q 7/34

(54) **Method of using the signal-to-noise ratio (SNR) to reduce factory test time**
Verfahren zur Verwendung des Signal-Rausch-Verhältnisses (SNR) zum Reduzieren der Prüffabrikzeit
Procédé d'utilisation du rapport signal sur bruit (SNR) permettent de réduire la durée de test d'usine

(43) Date of publication of application: 30.08.2006
(73) Proprietor: Research In Motion Limited, Waterloo, Ontario N2L 3W8 (CA)
(72) Inventor: Jin, Xin, N2L 3W8, Waterloo,Ontario (CA); Mallalieu, Jennifer, N2L 3W8, Waterloo,Ontario (CA); Jiao, Qingzhong, N2L 3W8, Waterloo, Ontario (CA); Harding, Ron, N2L 3W8, Waterloo,Ontario (CA)
(74) Representative: Rickard, David John

(56) References cited:
- THE DEFENSE ADVANCED RESEARCH PROJECTS AGENCY (DARPA) NETWORKING IN EXTREME ENVIRONMENTS (NETEX) PROGRAM: "Test Master Plan for the NETEX program"[Online] 15 August 2002 (2002-08-15), pages 1-35, XP002333378 Retrieved from the Internet: URL:http://www.mprg.org/people/buehrer/ult ra/pdfs/DARPA%20NETEX%20TEST%20PLAN.pdf> [retrieved on 2005-06-23]
- AGILENT TECHNOLOGIES: "WLAN Wireless Test Benches"[Online] September 2004 (2004-09), pages 3-1-4-20, XP002333379 Retrieved from the Internet: URL:http://eesof.tm.agilent.com/docs/rfded oc2004A/pdf/rfdewtbwlan.pdf> [retrieved on 2005-06-23]
- PATENT ABSTRACTS OF JAPAN vol. 2003, no. 12, 5 December 2003 (2003-12-05) & JP 2004 023755 A (ANRITSU CORP), 22 January 2004 (2004-01-22)
- 3RD GENERATION PARTNERSHIP PROJECT 2 "3GPP2": "Recommended Minimum Performance Standards for cdma2000 Spread Spectrum Base Stations"[Online] 14 January 2005 (2005-01-14), pages 1-A-35, XP002333380 Retrieved from the Internet: URL:http://www.3gpp2.org/Public_html/specs /C.S0010-C_v1.0_050120.pdf> [retrieved on 2005-06-23]

## Description

The application relates to wireless networks and more particularly to a method of reducing factory test time of receiver sensitivity of a wireless device, such as a Code Division Multiple Access (CDMA) wireless device.

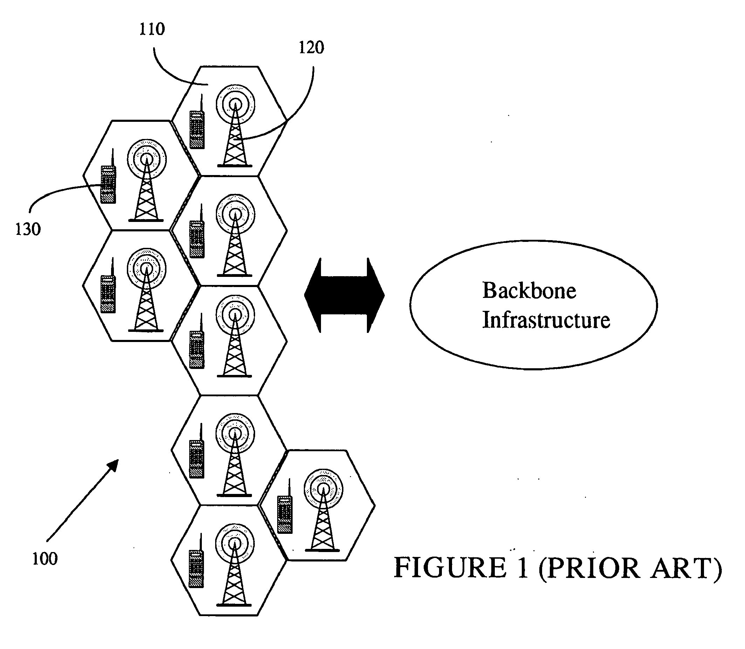

As shown in Figure 1, the delivery end of a typical mobile communication system 100 is divided into a number of cells 110 or geographical coverage areas, within each of which is a base station 120. Alternately, base station 120 for a number of cells 110 is co-located at the intersection of those cells and directional antennas are used to provide coverage over the area of each adjacent cell. Each base station 120 contains radio transmission and reception equipment for communicating with a wireless device 130, such as mobile phone, laptop, personal digital assistant (PDA) or the like, located within the associated cell 110. The coverage area of a given cell 110 is dependent upon a number of factors such as transmit/receive capabilities of the base station 120 and/or wireless device 130, the antenna (not shown) of base station 120, and the topology of the area. Specific radio frequencies are allocated with each cell 110. In a CDMA wireless network, the same frequency is reused in every cell. Each base station 120 connects to a backbone infrastructure (not shown) which perform a variety of functions such as the set up and tear down of call and the handoff of calls from one base station 120 to another.

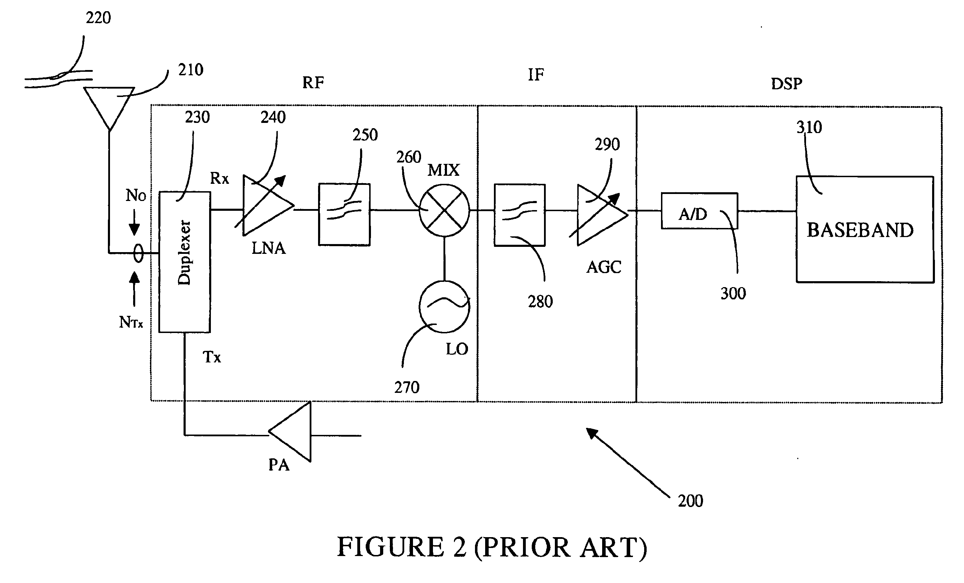

Figure 2 depicts a representative CDMA receiver block 200 for wireless device 130. Antenna 210 receives radio frequency signal 220 from base station 120 and converts it into a current on a conductor. The signal is very weak from absorption so, after passing through duplexer 230 (which simply permits a single antenna system to be used for both transmitting and receiving) the signal is amplified in low noise amplifier (LNA) 240. The signal is then passed through filter 250 to eliminate out-of-band noise and interference. In order to recover the original information signal from the modulated radio frequency signal 220, the signal is sent through mixer 260 which is fed by local oscillator (LO) 270 at the same frequency as the one in the transmitter (not shown) of base station 120 if, as shown in Figure 2, zero intermediate frequency (IF) technology is used. Alternatively, there may be more than one mixer 260 to mix the received signal 220 down to at least one non-zero intermediate frequency and then down to a baseband signal by multiple steps. Out of the mixer 260 come two frequency signals (sum and difference). One of the frequencies is the intermediate frequency, the other is eliminated by filter 280. The resulting signal is amplified by amplifier 290, and passed through analog to digital converter 300 for digital processing in baseband processor 310 which may comprise a RAKE receiver. As those skilled in the art will appreciate, wireless device 130 is a transceiver in that it incorporates both transmitter (Tx) and receiver (Rx) functionality (e.g. the power amplifier (PA) associated with the transmitter is shown in Figure 2). As will also be appreciated, the signal processing system of wireless device 130 may be comprised of multiple analog and mixed signal integrated circuit (IC) chips (such as amplifiers, filters, A/D and D/A converters), digital IC chips (such as memory, digital signal processors (DSP), and microprocessors) and many passive discrete components.

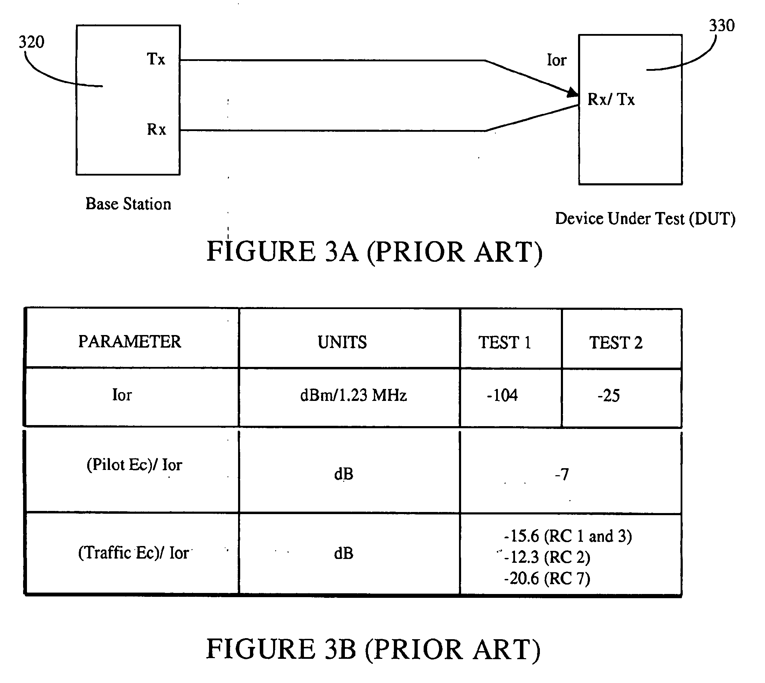

Quality assurance measures at the factory level ensure that wireless device 130 operates satisfactorily. Various standards have been developed against which wireless device 130 is measured. One such standard is a Telecommunications Industry Association/Electronic Industries Association standard, TIA/EIA/-98E, which defines recommended minimum performance standards for cdma2000 spread spectrum mobile stations. More specifically, a test is established in this standard for receiver sensitivity and dynamic range. The radio frequency (RF) sensitivity of a cdma2000 mobile station receiver is the minimum received power, measured at the mobile station antenna connector, at which the frame error rate (FER) does not exceed 0.5% with 95% confidence. In CDMA systems, the frame is the basic physical channel data packet, typically having a 20ms transmission time that consists of information on the traffic channel (voice or data). Because the link between base station and handset is established on a frame-by-frame basis the performance of a CDMA mobile phone is evaluated in terms of its FER. Regarding receiver sensitivity, two sources of interference are purely additive white Gaussian noise (AWGN): the receiver's input-referred thermal noise power spectral density (No) and the transmitter's thermal noise power spectral density (N_{Tx}) in the receiver frequency band (see Figure 2). A typical sensitivity and dynamic range test setup using FER is shown in Figure 3A while the associated test parameters as defined in TIA/EIA/-98E are shown in Figure 3B. A sensitivity test (test 1) ensures the receiver's ability to receive weak signals, and a dynamic range test (test 2) ensures the receiver's ability to receive a strong signal. In Figure 3A, the base station 120 is simulated using a piece of test equipment 320, such as the Agilent 8960 wireless communications test set, which feeds a test signal to an antenna port of a device under test (DUT) 330. As highlighted in Figure 3B, a typical test, at 9600 bps (RC 1 and 3) or 14400 bps (RC 2) data rate, consists of setting the test parameters of Test 1 or Test 2, and counting the number of frames transmitted at the base station and comparing it to the number of erroneous frames received at the mobile station.

One of the problems with the TIA/EIA/-98E receiver sensitivity test is that the test time is too long for mass production, being physically restricted by the arrival rate of the frames at DUT 330. In an attempt to reduce the test time, the maximum number of frames for the sensitivity test is limited to no more than 1000 (which may not always achieve the required 95% confidence level), but this method still takes up to 80 seconds for four channels at two bands. As will be appreciated, for thousands of units, the test time and associated cost in man hours may become prohibitive.

### GENERAL

In order to overcome the deficiencies of the FER test method, there is provided an improved receiver sensitivity test. For a given model of CDMA wireless device the relation between correlated energy or SNR and FER is determined using simulated traffic and the correlated energy or SNR measurements are then used as the test parameters on like models to achieve the same or superior test confidence with significantly reduced test time. Because the test is conducted over a time-invariant AWGN, and given the fact that the digital signal processing is identical to all DUT 330 of the same type, the frame error rate is only dependent on the correlated energy or SNR at the output of A/D 300 feeding to the baseband processor 310. Baseband processor 310 of a CDMA wireless device 130 includes an Ec/Io estimator (energy per chip to interference density ratio, which is a kind of expression of SNR often used in a CDMA based system), which is borrowed for the factory test. The Ec/Io estimate is determined by a RAKE finger energy estimator (producing an output related to correlated "energy") found in baseband processor 310, and some further processing which translates the estimated correlated energy to Ec/Io. Both Ec/Io and the correlated energy are monotonic functions of frame error rate under a given channel condition, so either can be used. Since the estimator reported correlated energy (or Ec/Io) contains a certain degree of random fluctuations, its distribution and nonlinear relation with frame error rate is characterized for a given model of wireless device, to determine a set of factory test criteria that achieves a test confidence level equal or superior to the TIA/EIA/-98E receiver sensitivity test. Once the characterization is carried out, each wireless device 130 is evaluated against the established pass/fail correlated energy or Ec/Io threshold.

In accordance with a first embodiment, there is provided a method of testing receiver sensitivity in a radio frequency (RF) device comprising: selecting a new test quantity obtained in baseband processing of a traffic signal received by the device and having a monotonic and predetermined relationship with the frame error rate, packet error rate or bit error rate after forward error correction of the traffic signal received by the device ; conducting a receiver sensitivity test on said radio frequency device using a simulated traffic signal, the new test quantity, and a new test criteria; wherein the new test criteria is determined from a respective known frame error rate, packet error rate or bit error rate after forward error correction criteria and the predetermined monotonic relationship between the new test quantity and the respective frame error rate, packet error rate or bit error rate after forward error correction of a traffic signal received by the device.

Preferably, the new test quantity is taken from the group comprising signal to noise ratio, signal to interference ratio, energy per chip to interference density ratio (Ec/Io), energy per bit to interference density ratio (Eb/Io), energy per symbol to interference density ratio (Es/Io), energy per chip to noise density ratio (Ec/No), energy per bit to noise density ration (Eb/No), energy per symbol to noise density ratio (Es/No), carrier power to noise density ratio (C/No), correlated energy, correlated amplitude, symbol error rate and bit error rate.

In accordance with a second embodiment, there is provided a wireless communications test set (320) for testing receiver sensitivity in a radio frequency (RF) device, the test set comprising: means for selecting a new test quantity obtained in baseband processing of a traffic signal received by the device and having a predetermined and monotonic relationship with the frame error rate, packet error rate or bit error rate after forward error correction of the traffic signal received by the device; means for conducting a receiver sensitivity test on said radio frequency device using a simulated traffic signal, the new test quantity, and a new test criteria; wherein the new test criteria is determined from a respective known frame error rate, packet error rate or bit error rate after forward error correction criteria and the predetermined monotonic relationship between the new test quantity and the respective frame error rate, packet error rate or bit error rate after forward error correction of a traffic signal received by the device.

In accordance with a third embodiment, there is provided a system for testing receiver sensitivity in a radio frequency (RF) device comprising: a wireless communications test set wireless communications test set (320) comprising: means for selecting a new test quantity obtained in baseband processing of a traffic signal received by the device and having a predetermined and monotonic relationship with the frame error rate, packet error rate or bit error rate after forward error correction of the traffic signal received by the device; means for conducting a receiver sensitivity test on said radio frequency device using a simulated traffic signal, the new test quantity, and a new test criteria; wherein the new test criteria is determined from a respective known frame error rate, packet error rate or bit error rate after forward error correction criteria and the predetermined monotonic relationship between the new test quantity and the respective frame error rate, packet error rate or bit error rate after forward error correction of a traffic signal received by the device; a device under test, said device under test being arranged to communicate with said wireless communications test set and to receive the simulated traffic signal from the wireless communications test set; wherein said RF device is any of a wireless device or a base station operating within a wireless network.

Preferably, the DUT comprises a baseband processor (310), and wherein the baseband processor comprises a channel estimator for estimating a new test quantity associated with the simulated traffic signal.

More preferably, the wireless communications test set (320) is connected via a coaxial cable to an antenna or radiating coupler positioned in a shielded enclosure housing the DUT (330), and wherein the DUT (330) receives the simulated traffic signal via a wireless transmission from the antenna or radiating coupler, and wherein path loss associated with the wireless transmission, the coaxial cable, or the antenna or radiating coupler, is corrected by the wireless communications test set (320).

The advantage of the described test method is now readily apparent. Using the improved testing methodology, the test time using the correlated energy or SNR technique can be reduced significantly. Test time using the FER method can span 48 to 80 seconds per device for one confidence level while using the correlated energy or SNR method can reduce the test time to a range of 10 to 22 seconds at the same confidence level.

Further features and advantages of the invention will be apparent from the detailed description which follows together with the accompanying drawings.

### BRIEF DESCRIPTION OF THE DRAWINGS

A better understanding of the invention will be obtained by considering the detailed description below, with reference to the following drawings in which:
Figure 1 depicts a typical mobile communication system;
Figure 2 depicts a representative receiver block diagram for a wireless device;
Figure 3A depicts a standard FER hardware test setup for sensitivity and dynamic range tests;
Figure 3B depicts a table showing the test parameters associated with a standard FER test according to TIA/EIA/-98E receiver sensitivity and dynamic range test;
Figure 4 depicts the steps in the characterization process whereby the relationship of correlated energy to FER is established;
Figure 5 depicts an energy estimator settle time chart;
Figures 6A and 6B depict a plot of FER(i) v. FERave and correlated energy v. FERave along with a plot of the 95% confidence line;
Figures 7A to 7E depict exemplary plots of correlated energy v. FER for sample sizes N= 5, 10, 20, 40 and 80;
Figure 8 depicts a table listing iteration criteria used in testing a wireless device using correlated energy;
Figures 9A and 9B depict the steps for testing a wireless device using correlated energy; and
Figure 10 depicts the steps for an alternate test on a wireless device using correlated energy.

### DESCRIPTION OF PREFERRED EMBODIMENTS

The first step in the testing methodology, is the energy or SNR and FER characterization. As those in the art will appreciate, one of the main advantages of CDMA systems is the capability of using signals that arrive in the receivers with different time delays. This phenomenon is called multipath. As discussed in the background section, CDMA wireless devices may use RAKE receivers located in baseband processor 310. A RAKE receiver uses several baseband correlators to individually process several signal multipath components. Each correlator in a RAKE receiver is called a RAKE-receiver finger. One of the receivers (fingers) usually is a dedicated channel searcher which obtains course estimates of the time and amplitude of arrival of the strongest multipath components of the wireless device signal. This information is then fed to the other fingers. Each finger then demodulates the signal corresponding to a strong multipath. The results are then combined together to make the signal stronger. The square of the amplitude at the correlator output is generally referred to as the correlated energy. Baseband processor 310 also includes a function which can map the correlator output energy to a signal to interference ratio, Ec/Io, expressed in dB. For the purposes of the present description, the test methodology will be described using the correlated energy, although Ec/Io could also be used and is meant to be included within the scope of the present application.

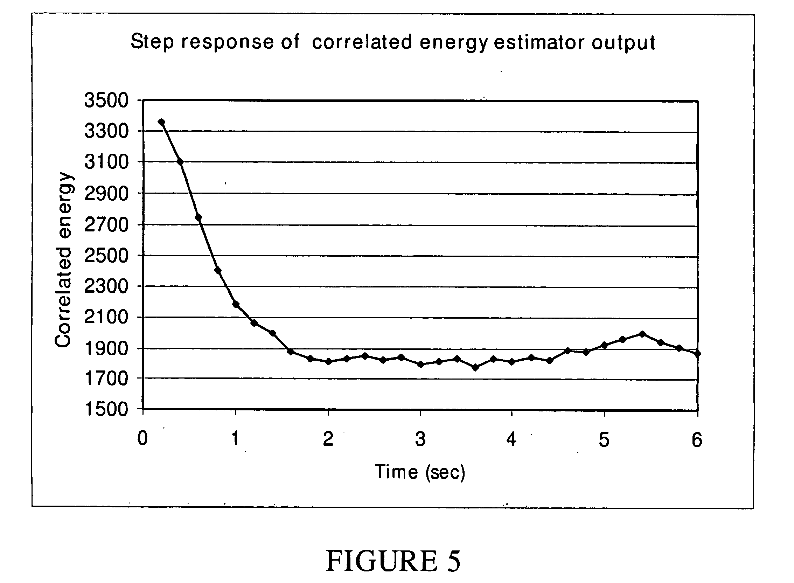

Prior to taking correlated energy readings it is necessary to determine the settling time for the correlated energy readings produced by the estimator i.e. to ensure that an erroneous transient reading is not inadvertently taken. This is accomplished by performing a test call at an arbitrarily chosen strong received signal strength (lor) e.g. -60_dBm. An automated program is then used to set lor to have a step decrease to a weak level around the device sensitivity, e.g. -105 dBm and an extended diagnostic monitor (XDM), a software tool well known to those skilled in the art, is used to read the correlated energy values. The frequency of reading by XDM should be chosen to be fast enough to get good time response samples e.g. five readings per second and an exemplary resulting time response for a sample device under test are shown in Figure 5. Each point on the graph is a distinct reading of energy. The results reveal that a wait time of about 1.5 seconds is sufficient to allow for settling of the energy signal.

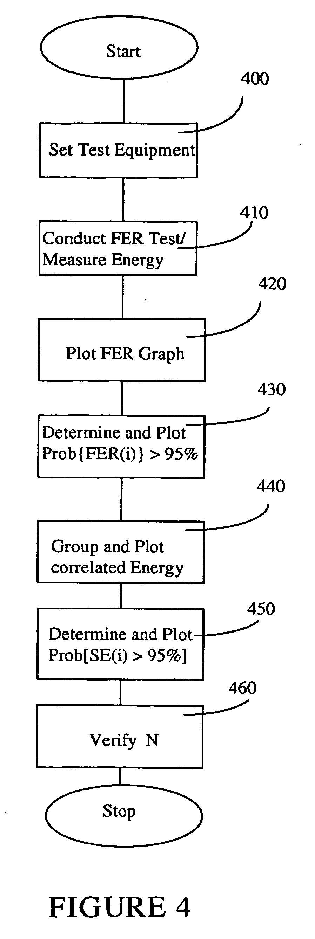

Figure 4 is a flow chart depicting the steps in the characterization process; this preparation step must be performed before the wireless device test can be conducted. The process generates a set of test parameters and criteria to be used in the test. For the characterization, two alternate objectives can be used. The first is to make the test method as reliable as an existing FER-based test in terms of false alarm rate (i.e. a good device mistakenly reported as bad), and missed detection rate (i.e. a bad device is mistakenly reported as good). The second is to make the new test compliant with the standard, which only controls the missed detection rate lower than 5% (i.e. 1-95%) and does not really care about the false alarm rate. The following describes the former embodiment and then describes the latter.

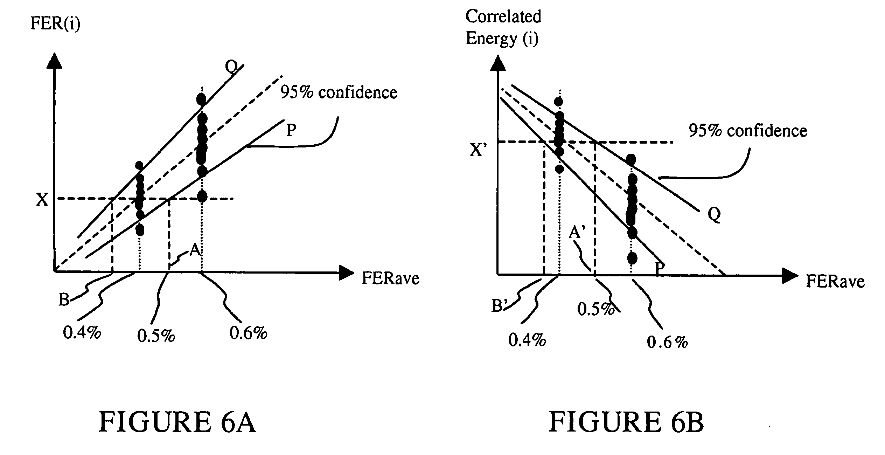

At step 400, the wireless communications test set (which simulates base station 120) is configured to the same receiver sensitivity test setting as detailed in TIA/EIA/-98E (see Fig. 3B) and Ior is set, for example, in 0.5 dB steps in a FER range that covers 0.1% ~ 1%. At step 410, device under test (DUT) 330 is then tested by, at each of a number of received signal strength (Ior) levels: (a) measuring the FER using the max number of frames that is used in factory e.g. 1000 frames; (b) repeating the measurement for a large number of times e.g. 20 times; (c) recording each individual FER(i) and also calculating the average FER of all the measured frames of the repeated measurement (denoted as FERave); and (d) simultaneously measuring and recording a large sample of correlated energy values for each Ior setting. At step 420, a scatter diagram of FER(i) vs. FERave is then plotted. At step 430, the 95% probability point is determined (i.e. an FER(i) value of P at which Prob[FER(i) > P] = 95%, and similarly an FER(i) value of Q at which Prob[FER(i)<Q] = 95%). In the calculation, if the sample size of FER(i) is not significantly large, such as 20 measurements, the variance of the 20 samples is used and Gaussian distribution is assumed to calculate the P and Q. The 95% confidence lines are then plotted on the graph by interpolating all of the P points, and all of the Q points respectively. A graph for a sample device is given in Figure 6A. As will be appreciated by those in the art, if a measurement of 1000 frames gets a raw FER(i) reading of X, most likely the a true FER is between B and A, and the worst case with 95% confidence is A. When A is FER of 0.5%, find the range between A and B. This range will help determine the number of averages needed in new tests for achieving a sufficiently low false alarm rate. B is the point on the line of 95% on the other side i.e., the Prob[FER(i) < Q] = 95%.

At step 440, the measured correlated energy samples are grouped by N=5 and the average value of each N-sample group is plotted as scatter diagram. An exemplary graph for a sample device is given in Figure 6B. At step 450, the 95% probability point of the scatters is located, similar to step 430, i.e., Prob[correlated energy(i) > P] = 95% and on the other side Prob[FER(i) < Q] = 95%. The point A'=0.5% is located and the range between A' and B' is obtained. If the range B'-A' is larger than that B-A obtained in step 430, N is increased and steps 440 and 450 are repeated. Otherwise N is decreased and steps 440 and 450 are repeated. At step 460, the N value determined at step 450 is verified for a number of sample devices. The N value determined at step 450 is used to measure the average correlated energy a number of times on each of a number of sample devices (good and bad) and each of a few channels on each band of the supported bands. The corresponding FER around 0.5% is also measured with a large number of frames (e.g. 5000 or more). The overall 95% confidence result is then determined to check for consistency and the pass/fail criteria (X and X' from Figures 6A and 6B), for the 0.5% FER with 95% confidence. For the purpose of compliance with the TIA/EIA/-98E standard and without taking into account the false alarm rate, N can be any value and only X' need be determined for the test.

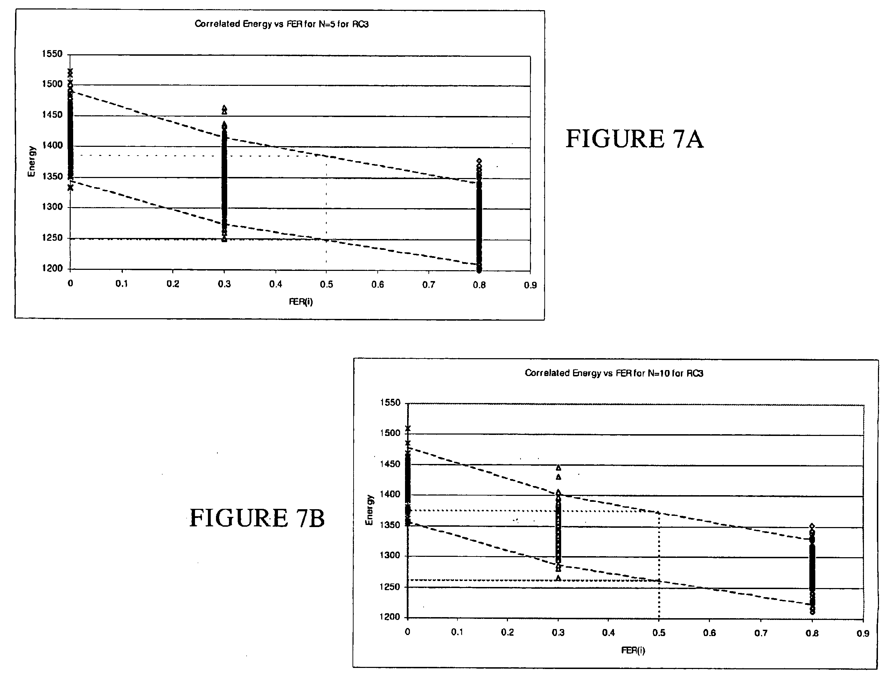

An alternate embodiment using variable N can also be used. To determine N, after the determined settling time of the test Ior, a continuous series of individual correlated energy samples are taken. The mean of N adjacent samples is calculated and plotted. The exemplary results for a device under test are shown in Figures 7A to 7E for N=5, 10, 20, 40, and 80. These values of N are chosen to simplify the processing of data in the test stage. Each point on the graphs depicted in Figures 7A to 7E is the scatter diagram of mean values of N adjacent readings. As N increases, the 95% confidence interval becomes narrower. Using a test limit of FER = 0.5%, taken from the plot of N=5 (Figure 7A), the corresponding correlated energy threshold value is determined to be 1385. Thus, a mean correlated energy above 1385, would indicate an FER <0.5%. It is obviously most desirable to use the lowest value of N to decrease test time i.e. N=5. However, it may not always be possible to determine a pass with N=5, as the false alarm rate may be too high. If a pass is not determined within N=5 samples, then N can be doubled until a maximum value of N=80 is reached. The maximum value of N is determined by the maximum test time allowed in manufacturing and the sampling rate for reading the energy values. If the mean of 80 energy readings is smaller than 1333, a fail is registered.

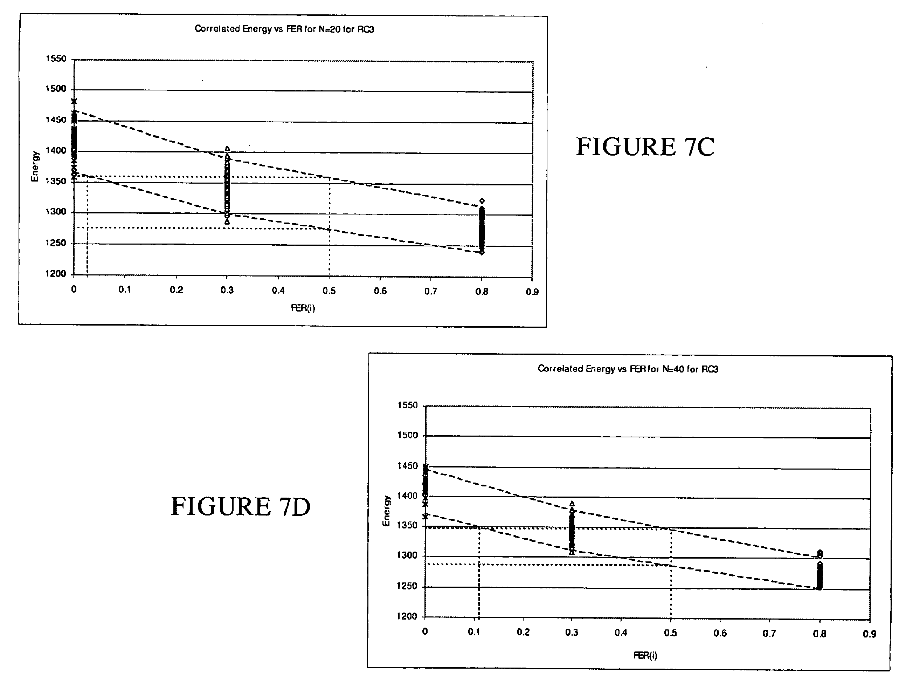

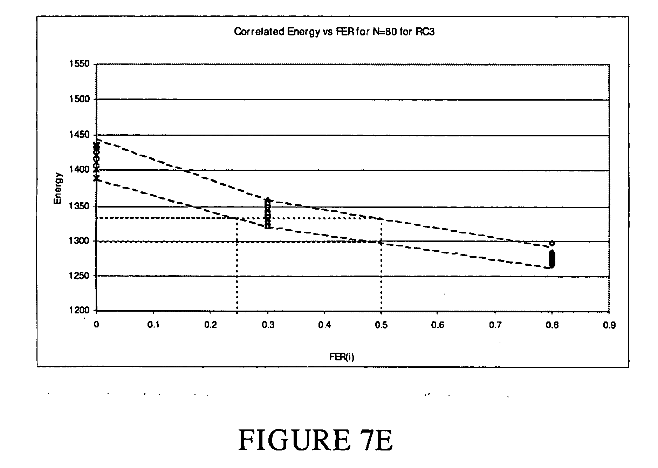

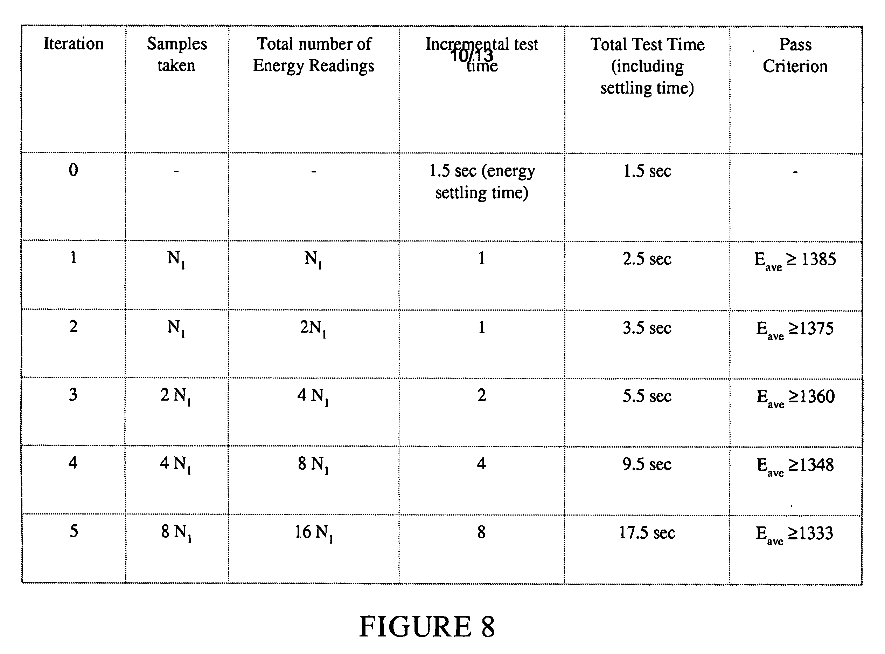

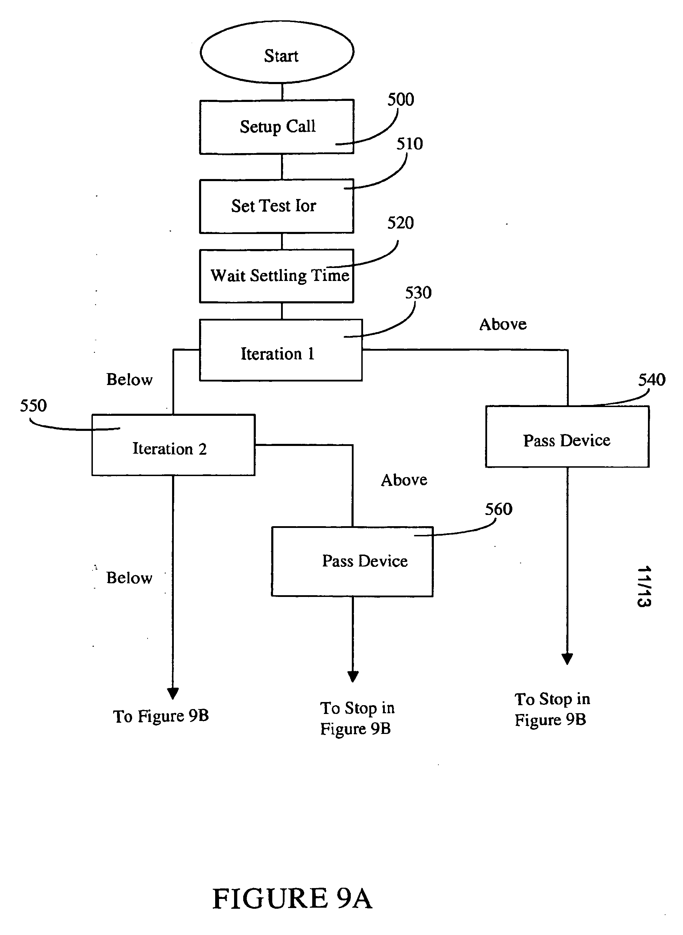

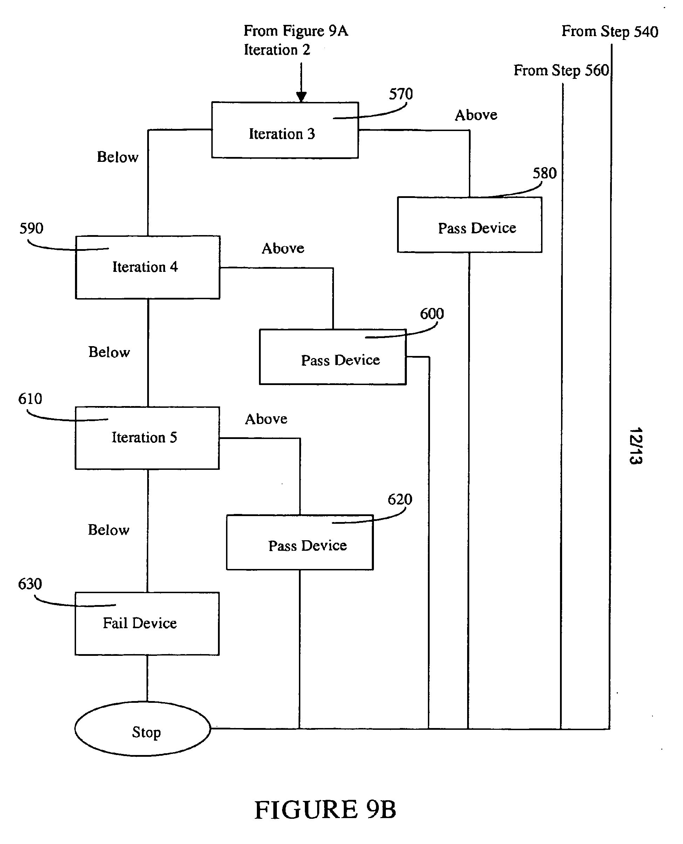

Having completed the characterization step to determine the correlated energy pass/fail thresholds, the actual test of the sample device can be conducted. Figure 8 depicts a table highlighting the number of correlated energy readings taken over a given time and the associated pass criterion for each iteration of the test for a sample device under test. The pass criterion are derived from Figures 7A to 7E. Figures 9A and 9B depict a flow chart highlighting the steps in a generic test. In Figure 9A, at step 500 a test call is setup on the test channel to generate simulated traffic. At step 510, the test Ior is set. At step 520, the tester waits the correlated energy estimator settling time (e.g. 1.5 seconds). At step 530, the first iteration is performed. N samples of correlated energy are taken within, for example, one second (where N is preferably greater than or equal to 5). The average of the N samples is then taken. If the calculated average is greater than the pass criterion established for the number of N samples (see Figure 7A and 8) then, at step 540 the device under test is passed. If the calculated average is below the pass criterion, then proceed to iteration two at step 550. In the second iteration, an additional N correlated energy samples are taken and the average of these samples is calculated. The average from the first iteration and the second iteration are added together and divided by two to form an overall average of 2N samples. If the new average is greater than the pass criterion established for the number of 2N samples (see Figure 7B and 8) then, at step 560, the device under test is passed. If the calculated average is below the pass criterion, then proceed to iteration three at step 570 in Figure 9B. The steps associated with second iteration are repeated with 2N additional correlated energy samples and the calculated average is compared to the 4N pass criteria. If the new average is greater than the pass criterion established for the number of 4N samples (see Figure 7C and 8) then, at step 580, the device under test is passed. If the calculated average is below the pass criterion, then proceed to iteration four at step 590. 4N additional correlated energy samples are taken and the calculated average is compared to the 8N pass criteria. If the new average is greater than the pass criterion established for the number of 8N samples (see Figure 7D and 8) then, at step 600, the device under test is passed. If the calculated average is below the pass criterion, then proceed to iteration five at step 610. 8N additional correlated energy samples are taken and the calculated average is compared to the 16N pass criteria. If the new average is greater than the pass criterion established for the number of 16N samples (see Figure 7E and 8) then, at step 620, the device under test is passed. If the calculated average is below the pass criterion, then, at step 630, the device under test is failed and testing begins on another device. Depending on the number of iterations a device has to be tested, some devices may take less time to finish testing than other devices. Overall, the average test time of many devices is significantly reduced. The number of iterations may not have to be five. The test which has been described serves only as an example.

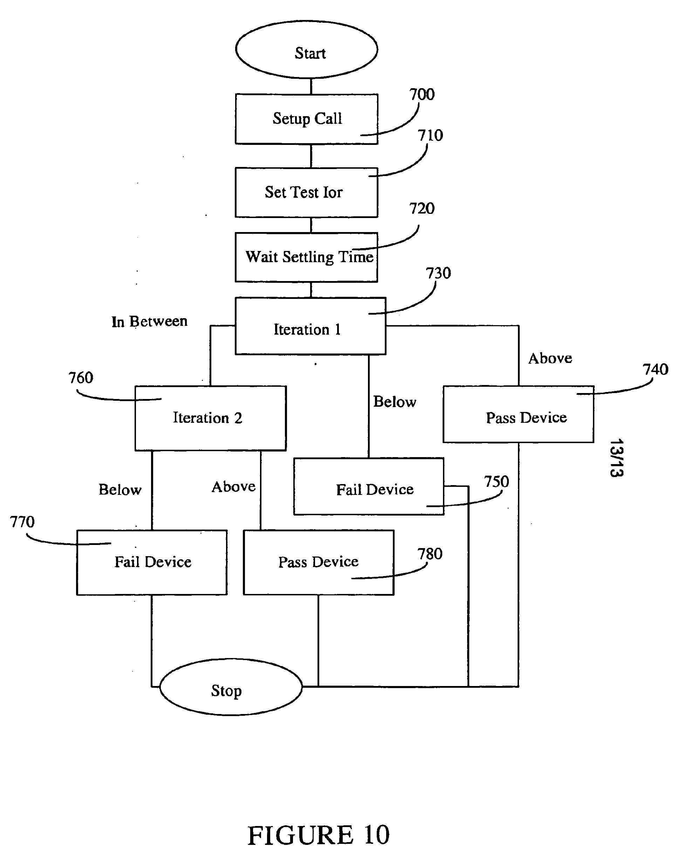

Figure 10 depicts an alternate test in accordance with the present application. At step 700 a test call is setup on the test channel. At step 710, the test lor is set. At step 720, the tester waits the correlated energy estimator settling time (e.g. 1.5 seconds). At step 730, the first iteration is performed. N samples of correlated energy are taken within, for example, one second (where N is preferably greater than or equal to 5). The average of the N samples is then taken. If the calculated average is greater than the upper pass criterion established for the number of N samples (see Figure 7A, upper limit for 0.5% FER and 95% confidence) then, at step 740 the device under test is passed. If the calculated average is below the lower fail criterion (see Figure 7A, lower limit for 0.5% FER and 95% confidence) then the device under test is failed at step 750. If the calculated average is between the upper and lower limit, then proceed to step 760. In the second iteration, 3N additional correlated energy samples are taken and the average of these samples is calculated. The average from the first iteration is weighted by ¼ and the second iteration is weighted by ¾ and then the two weighted values are added together to form an overall average of 4N samples. If the newly calculated average is less than the 4N fail criteria then, at step 770 the device under test is failed. If the newly calculated average is greater than the 4N pass criteria then, at step 780 the device under test is passed. The described 4N pass criteria represents the 50% confidence midpoint between the upper and lower limits for 95% confidence (see Figure 7C). Similarly, the test can be performed using a different number of iterations. The test described is only by way of example. As will be appreciated, if the test only allows two possible resulting decisions: Pass or Fail, the threshold has to be the mid point and for some devices the confidence of such decision has to be 50%. Alternately, the pass confidence can be 95% and the fail confidence can be as low as 5%, in which case the threshold used is the upper 95% point. In yet another embodiment, the resulting decision can be one of three: Pass, Fail or Uncertain, in which case to determine a device "Pass", the average must be higher than the upper 95% point, to determine a device "Fail" the average must be lower than the lower 95% point, and to determine a device "Uncertain", the average must be between the upper and lower 95% thresholds. In this case, both "Pass" and "Fail" decisions have a confidence of 95%.

As will be appreciated by those in the art, wireless communications test set 320 which simulates base station 120 may be hard wired directly to DUT 330 via coaxial cable to an RF connector or the coaxial cable could be hard wired to a transmitting antenna or a radiating coupler located within a shielded box or an RF anechoic chamber where DUT 330 is also located. DUT 330 may be simply a printed circuit board integral to a wireless device with the sensitivity test being conducted by feeding a test signal into an antenna port integral to the printed circuit board. It will also be appreciated that path loss introduced by the coaxial cables and/or antenna/couplers/propagation involved in the test set up is accounted for in the tests when setting the Ior value.

Although various exemplary embodiments of the invention have been disclosed, it should be apparent to those skilled in the art that various changes and modifications can be made which will achieve some of the advantages of the improved testing methodology without departing from the true scope of the application. More specifically, any physical quantity obtained in the baseband processing which has a monotonic relationship with signal to interference ratio can be used to conduct the receiver sensitivity test e.g. symbol error rate (SER), bit error rate (BER), carrier power to noise density ratio (C/No), energy per symbol to interference density ratio (Es/Io), energy per bit to interference density ratio (Eb/Io), energy per chip to noise density ratio (Ec/No), energy per bit to noise density ration (Eb/No), energy per symbol to noise density ratio (Es/No) etc. Also, the measurement replaced by a physical quantity (e.g. signal to interference ratio or correlated energy) in a test may not have to be FER. Other examples include packet error rate (PER) or BER after forward error correction. All such alternate embodiments are meant to be included within the scope of the invention. Additionally, the air interface is not limited to cdma2000. There are other examples including UMTS, GSM/GPRS, 802.11, etc to which the present invention can be applied. Finally, this test had been described in relation to a mobile device. The test is more universally applicable to any RF communication device where receiver sensitivity testing is required (e.g. for base station 120 in Figure 1) where a relationship between the existing test parameter and correlated energy or SNR can be determined to establish new thresholds against which the receiver's sensitivity can be evaluated.

A person understanding this invention may now conceive of alternative structures and embodiments or variations of the above all of which are intended to fall within the scope of the invention as defined in the claims that follow.

## Claims

1. A wireless communications test set (320) for testing receiver sensitivity in a radio frequency (RF) device, being **characterized by** the test set comprising:
means for selecting a new test quantity obtained in baseband processing of a traffic signal received by the device and having a predetermined and monotonic relationship with the frame error rate, packet error rate or bit error rate after forward error correction of the traffic signal received by the device;
means for conducting a receiver sensitivity test on said radio frequency device using a simulated traffic signal, the new test quantity, and a new test criteria;
wherein the new test criteria is determined from a respective known frame error rate, packet error rate or bit error rate after forward error correction criteria and the predetermined monotonic relationship between the new test quantity and the respective frame error rate, packet error rate or bit error rate after forward error correction of a traffic signal received by the device.

2. A test set according to claim 1, wherein the new test quantity is selected from the group comprising: signal to noise ratio (SNR), signal to interference ratio (Ec/Io), energy per chip to interference density ratio (Ec/Io), energy per bit to interference density ratio (Eb/Io), energy per symbol to interference density ratio (Es/Io), energy per chip to noise density ratio (Ec/No), energy per bit to noise density ration (Eb/No), energy per symbol to noise density ratio (Es/No), carrier power to noise density ratio (C/No), correlated energy, correlated amplitude, symbol error rate, bit error rate before forward error correction.

3. A test set according to claim 1 or 2, wherein the known frame error rate criteria is a frame error rate of 0.5% with 95% confidence.

4. A test set according to any one preceding claim, further comprising means for determining the predetermined relationship between the test quantity and the respective frame error rate, packet error rate or bit error rate after forward error correction of a traffic signal received by the device using a simulated traffic signal.

5. A system for testing receiver sensitivity in a radio frequency (RF) device being **characterized by** comprising:
a wireless communications test set (320) according to any one of claims 1 to 4;
a device under test (DUT) (330), said device under test being arranged to communicate with said wireless communications test set (320) and to receive the simulated traffic signal from the wireless communications test set;
wherein said RF device is any of a wireless device (130) or a base station (120) operating within a wireless network (100).

6. The system of claim 5, wherein an RF receiver of said RF device is arranged on a printed circuit board integral to said wireless device (130), and wherein said wireless communications test set (320) is arranged to conduct the receiver sensitivity test by feeding said simulated traffic signal into an antenna port integral to said printed circuit board.

7. The system of any one of claims 5 to 6 wherein said DUT (330) comprises a baseband processor (310), and wherein said baseband processor (310) comprises a channel estimator for estimating said new test quantity associated with said simulated traffic signal.

8. The system of claim 7 wherein said baseband processor (310) further comprises a function for translating a correlated energy value to a signal to noise ratio (SNR) or energy per chip to interference density ratio (Ec/Io).

9. The system of any one of claims 5 to 8 wherein said wireless communications test set (320) is connected via a coaxial cable to an antenna or radiating coupler positioned in a shielded enclosure housing said DUT (330), and wherein said DUT (330) is arranged to receive said simulated traffic signal via a wireless transmission from said antenna or radiating coupler, and wherein said wireless communications test set (320) is arranged to correct path loss associated with said wireless transmission, said coaxial cable, or said antenna or radiating coupler.

10. A method of testing receiver sensitivity in a radio frequency (RF) device being **characterized by** comprising:
selecting a new test quantity obtained in baseband processing of a traffic signal received by the device and having a monotonic and predetermined relationship with the frame error rate, packet error rate or bit error rate after forward error correction of the traffic signal received by the device ;
conducting a receiver sensitivity test on said radio frequency device using a simulated traffic signal, the new test quantity, and a new test criteria;
wherein the new test criteria is determined from a respective known frame error rate, packet error rate or bit error rate after forward error correction criteria and the predetermined monotonic relationship between the new test quantity and the respective frame error rate, packet error rate or bit error rate after forward error correction of a traffic signal received by the device.

11. The method of claim 10 wherein said new test quantity is read from a baseband processor (310) associated with said RF device.

12. The method of claim 10 or 11 wherein said new test criteria corresponds with a known frame error rate criteria of 0.5% with 95% confidence.

13. The method of any one of claims 10 to 12, wherein said new test quantity comprises any of signal to noise ratio, signal to interference ratio, energy per chip to interference density ratio (Ec/Io), energy per bit to interference density ratio (Eb/Io), energy per symbol to interference density ratio (Es/Io), energy per chip to noise density ratio (Ec/No), energy per bit to noise density ration (Eb/No), energy per symbol to noise density ratio (Es/No), carrier power to noise density ratio (C/No), correlated energy, correlated amplitude, symbol error rate and/or bit error rate before forward error correction.

14. The method of any one of claims 10 to 13, further comprising determining the predetermined relationship between the test quantity and the respective frame error rate, packet error rate or bit error rate after forward error correction of a traffic signal received by the device using a simulated traffic signal.

15. The method of claim 14, wherein said step of determining the predetermined relationship comprises:
obtaining a plurality of said frame error rate measurements and corresponding values of said new test quantity at each of a plurality of received signal strengths;
calculating at each of said plurality of received signal strength levels an average value of said plurality of said frame error rate measurements;
plotting the averages of N-sample groups of said corresponding values of said new test quantity versus said calculated average values of said plurality of said frame error rate measurements and determining targeted confidence level probability points from said plot;
interpolating between said targeted confidence level probability points for different ones of said plurality of received signal strength levels; and
determining a pass/fail threshold for said new test quantity which corresponds to a pass/fail criteria associated with said known frame error rate criteria.

16. The method of any one of claims 10 to 15 wherein said step of conducting a receiver sensitivity test comprises:
waiting a defined settling time;
obtaining N samples of said new test quantity;
calculating the average of the N samples;
if said calculated average is greater than a specified N new test quantity threshold, passing said wireless device,
else, if said calculated average is less than said specified N new test quantity threshold, obtaining a multiple number ofN additional samples and repeating the steps of calculating the average of the N samples and passing said wireless device; and
after a predefined number of iterations, failing said RF device if said new test quantity threshold has not been met.

17. The method of any one of claims 10 to 15 wherein said step of conducting a receiver sensitivity test comprises:
waiting a defined settling time;
obtaining N samples of said new test quantity;
calculating the average of the N samples;
if said calculated average is greater than an upper limit associated with a specified N test quantity threshold, passing said wireless device,
else, if said calculated average is less than said upper limit associated with said N new test quantity threshold but greater than a lower limit associated with said N test quantity threshold, obtaining 3N additional samples and repeating the steps of calculating the average of the N samples and passing said wireless device wherein a calculated 4N average is obtained by assigning said N samples a weighted average of ¼ and said 3N samples a weighted average of ¾; and
if said 4N calculated average is less than a specified 4N new test quantity threshold, failing said RF device.

18. The method of claim 14 wherein said new test quantity is correlated energy, and
wherein said determining the predetermined relationship comprises:
obtaining a plurality of FER measurements and corresponding correlated energy values at each of a plurality of received signal strengths;
calculating an average value of said plurality of FER measurements obtained at each of said plurality of received signal strengths;
plotting said plurality of FER measurements versus said calculated FER averages and determining the 95% probability point from said plot;
plotting the averages of N-sample groups of said corresponding correlated energy values versus said calculated FER averages and determining the 95% probability points from said plot;
interpolating between the 95% probability points for different ones of said plurality of received signal strength levels; and
determining a correlated energy threshold for 0.5% FER with 95% confidence.

19. The method of claim 18 wherein said step of conducting a receiver sensitivity test comprises:
waiting a defined settling time;
obtaining N samples of said correlated energy;
calculating the average of the N samples;
if said calculated average is greater than a specified N correlated energy threshold, passing said wireless device; and
else, if said calculated average is less than said specified N correlated energy threshold, obtaining a multiple number ofN additional samples and repeating the steps of calculating the average of the N samples and passing said wireless device; and
after a predefined number of iterations, failing said RF device if said correlated energy threshold has not been met.

20. The method of claim 18 wherein said step of conducting a receiver sensitivity test comprises:
waiting a defined settling time;
obtaining N samples of said correlated energy;
calculating the average of the N samples;
if said calculated average is greater than an upper limit associated with a specified N correlated energy threshold passing said wireless device; and
else if said calculated average is less than said upper limit associated with said specified N correlated energy threshold but greater than a lower limit associated with said specified N correlated energy threshold, obtaining 3N additional samples and repeating the steps of calculating the average of the N samples and passing the wireless device wherein a calculated 4N average is obtained by assigning said N samples a weighted average of ¼ and said 3N samples a weighted average of ¾; and
if said 4N calculated average is less than a specified 4N correlated energy threshold, failing said RF device.

21. The method of any one of claims 18 to 20, wherein the step of obtaining a plurality of FER measurements and corresponding correlated energy values further comprises the step of translating said correlated energy values to corresponding signal to noise ratio (SNR) or Ec/Io values, and wherein the steps of passing and/or failing said wireless device are performed using said mapped SNR or Ec/Io values.

22. The method of claim 20, wherein the step of obtaining N samples of said correlated energy further comprises the step of translating said correlated energy values to corresponding signal to noise ratio (SNR) or Ec/Io values, and wherein the steps of calculating the average of the N samples and passing and/or failing said wireless device are performed using said mapped SNR or Ec/Io values.

23. A machine readable medium comprising program code means executable by a processor of the wireless communications test set (320) of any one of claims 1 to 4 for implementing the method of any of claims 10 to 22.

## Patentansprüche

1. Prüfanordnung für drahtlose Kommunikationen (320) zum Prüfen der Empfängerempfindlichkeit in einem Hochfrequenz-(HF-)Gerät, welche **dadurch gekennzeichnet ist, dass** die Prüfanordnung Folgendes umfasst:
Mittel zum Auswählen einer neuen Prüfmenge, die bei der Basisband-Verarbeitung eines von dem Gerät empfangenen Verkehrssignals bezogen wird und eine vorher festgelegte und monotone Beziehung mit der Rahmenfehlerrate, Paketfehlerrate oder Bitfehlerrate nach der Vorwärts-Fehlerkorrektur des von dem Gerät empfangenen Verkehrssignals hat;
Mittel zum Durchführen einer Empfängerempfindlichkeitsprüfung auf dem Hochfrequenzgerät unter Nutzung eines simulierten Verkehrssignals, der neuen Prüfmenge und eines neuen Prüfkriteriums;
wobei das neue Prüfkriterium mittels eines jeweilig bekannten Kriteriums einer Rahmenfehlerrate, Paketfehlerrate oder Bitfehlerrate nach Vorwärts-Fehlerkorrektur und der vorher festgelegten monotonen Beziehung zwischen der neuen Prüfmenge und der jeweiligen Rahmenfehlerrate, Paketfehlerrate oder Bitfehlerrate nach der Vorwärts-Fehlerkorrektur eines von dem Gerät empfangenen Verkehrssignals ermittelt wird.

2. Prüfanordnung nach Anspruch 1, wobei die neue Prüfmenge aus der Gruppe ausgewählt wird, welche Folgendes umfasst: Signal-Rausch-Verhältnis (SNR), Signal-Interferenz-Verhältnis (Ec/Io), Chipenergie-Interferenz-Dichteverhältnis (Ec/Io), Bitenergie-Interferenz-Dichteverhältnis (Eb/Io), Symbolenergie-Interferenz-Dichteverhältnis (Es/Io), Chipenergie-Rausch-Dichteverhältnis (Ec/No), Bitenergie-Rausch-Dichteverhältnis (Eb/No), Symbolenergie-Rausch-Dichteverhältnis (Es/No), Trägerleistung-Rausch-Dichteverhältnis (C/No), korrelierte Energie, korrelierte Amplitude, Symbolfehlerrate, Bitfehlerrate vor der Vorwärts-Fehlerkorrektur.

3. Prüfanordnung nach Anspruch 1 oder 2, wobei das bekannte Rahmenfehlerratenkriterium eine Rahmenfehlerrate von 0,5% mit einem 95%-igen Konfidenzniveau ist.

4. Prüfanordnung nach einem vorhergehenden Anspruch, die des Weiteren Mittel zum Ermitteln der vorher festgelegten Beziehung zwischen der Prüfmenge und der jeweiligen Rahmenfehlerrate, Paketfehlerrate oder Bitfehlerrate nach der Vorwärts-Fehlerkorrektur eines von dem Gerät empfangenen Verkehrssignals umfasst, wobei ein simuliertes Verkehrssignal genutzt wird.

5. System zum Prüfen der Empfängerempfindlichkeit in einem Hochfrequenz-(HF-) Gerät, das **dadurch gekennzeichnet ist, dass** es Folgendes umfasst:
Prüfanordnung für drahtlose Kommunikationen (320) nach einem der Ansprüche 1 bis 4;
Prüfling (DUT) (330), wobei der Prüfling angeordnet ist, um mit der Prüfanordnung für drahtlose Kommunikationen (320) zu kommunizieren und das simulierte Verkehrssignal von der Prüfanordnung für drahtlose Kommunikationen her zu empfangen;
wobei das HF-Gerät ein beliebiges von einem drahtlosen Gerät (130) oder einer Basisstation (120) ist, welche in einem drahtlosen Netz (100) arbeiten.

6. System nach Anspruch 5, wobei ein HF-Empfänger des HF-Geräts auf einer gedruckten Leiterplatte angeordnet ist, die in das drahtlose Gerät (130) eingebaut ist, und wobei die Prüfanordnung für drahtlose Kommunikationen (320) angeordnet ist, um die Empfängerempfindlichkeitsprüfung durch Eingeben des simulierten Verkehrssignals in einen in der gedruckten Leiterplatte eingebauten Antennenanschluss durchzuführen.

7. System nach einem der Ansprüche 5 bis 6, wobei der Prüfling (330) einen Basisband-Prozessor (310) umfasst und wobei der Basisband-Prozessor (310) einen Kanalschätzer zum Schätzen der mit dem simulierten Verkehrssignal verbundenen neuen Prüfmenge umfasst.

8. System nach Anspruch 7, wobei der Basisband-Prozessor (310) des Weiteren eine Funktion zum Übersetzen eines Wertes korrelierter Energie in ein Signal-Rausch-Verhältnis (SNR) oder Chipenergie-Interferenz-Dichteverhältnis (Ec/Io) umfasst.

9. System nach einem der Ansprüche 5 bis 8, wobei die Prüfanordnung für drahtlose Kommunikationen (320) über ein Koaxialkabel mit einer Antenne oder einem strahlenden Verbindungsstück verbunden ist, welches in einem abgeschirmten Gehäuse positioniert ist, in dem der Prüfling (330) untergebracht ist, und wobei der Prüfling (330) angeordnet ist, um das simulierte Verkehrssignal über eine drahtlose Übertragung von der Antenne oder dem strahlenden Verbindungsstück her zu empfangen, und wobei die Prüfanordnung für drahtlose Kommunikationen (320) angeordnet ist, um die mit der drahtlosen Übertragung, dem Koaxialkabel oder der Antenne oder dem strahlenden Verbindungsstück verbundene Streckendämpfung zu korrigieren.

10. Verfahren zum Prüfen der Empfängerempfindlichkeit in einem Hochfrequenz-(HF-)Gerät, das **dadurch gekennzeichnet ist, dass** es Folgendes umfasst:
Auswählen einer neuen Prüfmenge, die bei der Basisband-Verarbeitung eines von dem Gerät empfangenen Verkehrssignals bezogen wird und eine monotone und vorher festgelegte Beziehung mit der Rahmenfehlerrate, Paketfehlerrate oder Bitfehlerrate nach der Vorwärts-Fehlerkorrektur des von dem Gerät empfangenen Verkehrssignals hat;
Durchführen einer Empfängerempfindlichkeitsprüfung auf dem Hochfrequenzgerät unter Nutzung eines simulierten Verkehrssignals, der neuen Prüfmenge und eines neuen Prüfkriteriums;
wobei das neue Prüfkriterium mittels eines jeweilig bekannten Kriteriums einer Rahmenfehlerrate, Paketfehlerrate oder Bitfehlerrate nach Vorwärts-Fehlerkorrektur und der vorher festgelegten monotonen Beziehung zwischen der neuen Prüfmenge und der jeweiligen Rahmenfehlerrate, Paketfehlerrate oder Bitfehlerrate nach der Vorwärts-Fehlerkorrektur eines von dem Gerät empfangenen Verkehrssignals ermittelt wird.

11. Verfahren nach Anspruch 10, wobei die neue Prüfmenge mit Hilfe eines mit dem HF-Gerät verbundenen Basisband-Prozessors (310) gelesen wird.

12. Verfahren nach Anspruch 10 oder 11, wobei das neue Prüfkriterium einem bekannten Rahmenfehlerratenkriterium von 0,5 % mit einem 95%-igen Konfidenzniveau entspricht.

13. Verfahren nach einem der Ansprüche 10 bis 12, wobei die neue Prüfmenge ein beliebiges von dem Signal-Rausch-Verhältnis, Signal-Interferenz-Verhältnis, Chipenergie-Interferenz-Dichteverhältnis (Ec/Io), Bitenergie-Interferenz-Dichteverhältnis (Eb/Io), Symbolenergie-Interferenz-Dichteverhältnis (Es/Io), Chipenergie-Rausch-Dichteverhältnis (Ec/No), Bitenergie-Rausch-Dichteverhältnis (Eb/No), Symbolenergie-Rausch-Dichteverhältnis (Es/No), Trägerleistung-Rausch-Dichteverhältnis (C/No), korrelierte Energie, korrelierte Amplitude, Symbolfehlerrate und/oder Bitfehlerrate vor der Vorwärts-Fehlerkorrektur umfasst.

14. Verfahren nach einem der Ansprüche 10 bis 13, das des Weiteren das Ermitteln der vorher festgelegten Beziehung zwischen der Prüfmenge und der jeweiligen Rahmenfehlerrate, Paketfehlerrate oder Bitfehlerrate nach der Vorwärts-Fehlerkorrektur eines von dem Gerät empfangenen Verkehrssignals umfasst, wobei ein simuliertes Verkehrssignal genutzt wird.

15. Verfahren nach Anspruch 14, wobei der Schritt des Ermittelns der vorher festgelegten Beziehung Folgendes umfasst:
Beziehen einer Vielzahl der Rahmenfehlerratenmesswerte und entsprechenden Werte der neuen Prüfmenge bei jeder einer Vielzahl empfangener Signalstärken;
Berechnen eines Durchschnittswerts der Vielzahl der Rahmenfehlerratenmesswerte auf jeder der Vielzahl empfangener Signalstärkepegel;
graphisches Darstellen der Durchschnittswerte von N-Stichprobengruppen der entsprechenden Werte der neuen Prüfmenge gegenüber den berechneten Durchschnittswerten der Vielzahl der Rahmenfehlerratenmesswerte und Ermitteln geplanter Konfidenzniveau-Wahrscheinlichkeitspunkte anhand der graphischen Darstellung;
Interpolieren zwischen den geplanten Konfidenzniveau-Wahrscheinlichkeitspunkten für verschiedene der Vielzahl empfangener Signalstärkepegel; und
Ermitteln eines OK/Fehler-Schwellwerts für die neue Prüfmenge, welcher einem mit dem bekannten Rahmenfehlerratenkriterium verbundenen OK/Fehler-Kriterium entspricht.

16. Verfahren nach einem der Ansprüche 10 bis 15, wobei der Schritt des Durchführens einer Empfängerempfindlichkeitsprüfung Folgendes umfasst:
Warten während einer definierten Ausgleichzeit;
Beziehen von N-Stichproben der neuen Prüfmenge;
Berechnen des Durchschnittswerts der N-Stichproben;
falls der berechnete Durchschnittswert größer ist als ein spezifizierter N-Schwellwert der neuen Prüfmenge, Ermitteln von OK für das drahtlose Gerät,
sonst, falls der berechnete Durchschnittswert kleiner ist als der spezifizierte N-Schwellwert der neuen Prüfmenge, Beziehen eines Vielfachen von weiteren N-Stichproben und Wiederholen der Schritte des Berechnens des Durchschnittswerts der N-Stichproben und Ermitteln von OK für das drahtlose Gerät; und
nach einer vordefinierten Zahl von Iterationen Ermitteln eines Fehlers für das drahtlose HF-Gerät, falls der Schwellwert der neuen Prüfmenge nicht erreicht worden ist.

17. Verfahren nach einem der Ansprüche 10 bis 15, wobei der Schritt des Durchführens einer Empfängerempfindlichkeitsprüfung Folgendes umfasst:
Warten während einer definierten Ausgleichzeit;
Beziehen von N-Stichproben der neuen Prüfmenge;
Berechnen des Durchschnittswerts der N-Stichproben;
falls der berechnete Durchschnittswert größer ist als ein oberer Grenzwert, der mit einem spezifizierten N-Schwellwert der Prüfmenge verbunden ist, Ermitteln von OK für das Gerät,
sonst, falls der berechnete Durchschnittswert kleiner ist als der mit dem N-Schwellwert der neuen Prüfmenge verbundene obere Grenzwert, jedoch größer ist als ein mit dem N-Schwellwert der Prüfmenge verbundener unterer Grenzwert, Beziehen von weiteren 3N-Stichproben und Wiederholen der Schritte des Berechnens des Durchschnittswerts der N-Stichproben und Ermitteln von OK für das drahtlose Gerät, wobei ein berechneter 4N-Durchschnittswert **dadurch** bezogen wird, dass den N-Stichproben ein gewichteter Durchschnittswert von ¼ und den 3N-Stichproben ein gewichteter Durchschnittswert von ¾ zugewiesen wird; und
falls der berechnete 4N-Durchschnittswert kleiner ist als ein spezifizierter 4N-Schwellwert der neuen Prüfmenge, Ermitteln eines Fehlers für das HF-Gerät.

18. Verfahren nach Anspruch 14, wobei die neue Prüfmenge korrelierte Energie ist und wobei das Ermitteln der vorher festgelegten Beziehung Folgendes umfasst:
Beziehen einer Vielzahl von FER-Messwerten und entsprechenden Werten korrelierter Energie bei jeder einer Vielzahl empfangener Signalstärken;
Berechnen eines Durchschnittswerts der Vielzahl von FER-Messwerten, die bei jeder der Vielzahl empfangener Signalstärken bezogen werden;
graphisches Darstellen der Vielzahl von FER-Messwerten gegenüber den berechneten FER-Durchschnittswerten und Ermitteln des 95%-Wahrscheinlichkeitspunkts anhand der graphischen Darstellung;
graphisches Darstellen der Durchschnittswerte von N-Stichprobengruppen der entsprechenden Werte korrelierter Energie gegenüber den berechneten FER-Durchschnittswerten und Ermitteln der 95%-Wahrscheinlichkeitspunkte anhand der graphischen Darstellung;
Interpolieren zwischen den 95%-Wahrscheinlichkeitspunkten für verschiedene der Vielzahl empfangener Signalstärkepegel; und
Ermitteln eines Schwellwerts korrelierter Energie für eine 0,5%-FER mit einem 95%-igen Konfidenzniveau.

19. Verfahren nach Anspruch 18, wobei der Schritt des Durchführens einer Empfängerempfindlichkeitsprüfung Folgendes umfasst:
Warten während einer definierten Ausgleichzeit;
Beziehen von N-Stichproben der korrelierten Energie;
Berechnen des Durchschnittswerts der N-Stichproben;
falls der berechnete Durchschnittswert größer ist als ein spezifizierter N-Schwellwert der korrelierten Energie, Ermitteln von OK für das drahtlose Gerät; und
sonst, falls der berechnete Durchschnittswert kleiner ist als der spezifizierte N-Schwellwert der korrelierten Energie, Beziehen eines Vielfachen von weiteren N-Stichproben und Wiederholen der Schritte des Berechnens des Durchschnittswerts der N-Stichproben und Ermitteln von OK für das drahtlose Gerät; und
nach einer vordefinierten Zahl von Iterationen Ermitteln eines Fehlers für das HF-Gerät, falls der Schwellwert der korrelierten Energie nicht erreicht worden ist.

20. Verfahren nach Anspruch 18, wobei der Schritt des Durchführens einer Empfängerempfindlichkeitsprüfung Folgendes umfasst:
Warten während einer definierten Ausgleichzeit;
Beziehen von N-Stichproben der korrelierten Energie;
Berechnen des Durchschnittswerts der N-Stichproben;
falls der berechnete Durchschnittswert größer ist als ein mit einem spezifizierten N-Schwellwert der korrelierten Energie verbundener oberer Grenzwert, Ermitteln von OK für das drahtlose Gerät; und
ansonsten, falls der berechnete Durchschnittswert kleiner ist als der mit dem spezifizierten N-Schwellwert der korrelierten Energie verbundene obere Grenzwert, jedoch größer ist als ein mit dem spezifizierten N-Schwellwert der korrelierten Energie verbundener unterer Grenzwert, Beziehen von weiteren 3N-Stichproben und Wiederholen der Schritte des Berechnens des Durchschnittswerts der N-Stichproben und Ermitteln von OK für das drahtlose Gerät, wobei ein berechneter 4N-Durchschnittswert **dadurch** bezogen wird, dass den N-Stichproben ein gewichteter Durchschnittswert von ¼ und den 3N-Stichproben ein gewichteter Durchschnittswert von ¾ zugewiesen wird; und
falls der berechnete 4N-Durchschnittswert kleiner ist als ein spezifizierter 4N-Schwellwert der korrelierten Energie, Ermitteln eines Fehlers für das HF-Gerät.

21. Verfahren nach einem der Ansprüche 18 bis 20, wobei der Schritt des Beziehens einer Vielzahl von FER-Messwerten und entsprechenden Werten korrelierter Energie des Weiteren den Schritt des Übersetzens der Werte korrelierter Energie in entsprechende Signal-Rausch-Verhältnis-(SNR-) oder Ec/Io-Werte umfasst und wobei die Schritte des Ermittelns von OK und/oder eines Fehlers für das drahtlose Gerät unter Nutzung der abgebildeten SNR- oder Ec/Io-Werte ausgeführt werden.

22. Verfahren nach Anspruch 20, wobei der Schritt des Beziehens von N-Stichproben der korrelierten Energie des Weiteren den Schritt des Übersetzens der Werte korrelierter Energie in entsprechende Signal-Rausch-Verhältnis-(SNR-) oder Ec/Io-Werte umfasst und wobei die Schritte des Berechnens des Durchschnittswerts der N-Stichproben und des Ermittelns von OK und/oder eines Fehlers für das drahtlose Gerät unter Nutzung der abgebildeten SNR- oder Ec/Io-Werte ausgeführt werden.

23. Rechnerlesbares Medium, das von einem Prozessor der Prüfanordnung für drahtlose Kommunikationen (320) nach einem der Ansprüche 1 bis 4 ausführbare Programmcodemittel zum Durchführen des Verfahrens nach einem der Ansprüche 10 bis 22 umfasst.

## Revendications

1. Un appareil d'essai de communications sans fil (320) destiné à tester la sensibilité de récepteur d'un dispositif RF (à fréquences radioélectriques), l'appareil d'essai étant **caractérisé par** :
un moyen de sélectionner une nouvelle quantité d'essai obtenue par un traitement de bande de base d'un signal de trafic reçu par le dispositif et possédant une relation prédéterminée et monotone avec le taux d'erreur sur les trames, le taux d'erreur sur les paquets ou le taux d'erreur sur les bits après correction d'erreurs vers l'avant du signal de trafic reçu par le dispositif,
un moyen de mener un test de sensibilité de récepteur sur ledit dispositif à fréquences radioélectriques en utilisant un signal de trafic simulé, la nouvelle quantité d'essai et un nouveau critère d'essai,
où le nouveau critère d'essai est déterminé à partir d'un critère respectif connu relatif au taux d'erreur sur les trames, au taux d'erreur sur les paquets ou au taux d'erreur sur les bits après correction d'erreurs vers l'avant et d'une relation monotone prédéterminée entre la nouvelle quantité d'essai et les taux respectifs d'erreur sur les trames, d'erreur sur les paquets ou d'erreur sur les bits après correction d'erreurs vers l'avant d'un signal de trafic reçu par le dispositif.

2. Un appareil d'essai selon la Revendication 1 où la nouvelle quantité d'essai est sélectionnée dans le groupe comprenant les éléments : rapport signal sur bruit (SNR), rapport signal sur brouillage (Ec/Io), rapport énergie par puce sur densité du signal brouilleur (Ec/Io), rapport énergie par bit sur densité du signal brouilleur (Eb/Io), rapport énergie par symbole sur densité du signal brouilleur (Es/Io), rapport énergie par puce sur densité du bruit (Ec/No), rapport énergie par bit sur densité du bruit (Eb/No), rapport énergie par symbole sur densité du bruit (Es/No), rapport puissance de l'onde porteuse sur densité du bruit (C/No), énergie corrélée, amplitude corrélée, taux d'erreur sur les symboles, taux d'erreur sur les bits avant correction d'erreurs vers l'avant.

3. Un appareil d'essai selon la Revendication 1 ou 2, où le critère connu de taux d'erreur sur les trames est un taux d'erreur sur les trames de 0,5% avec une certitude de 95%.

4. Un appareil d'essai selon l'une quelconque des Revendications précédentes comprenant en outre un moyen de déterminer la relation prédéterminée entre la quantité d'essai et les taux respectifs d'erreur vers l'avant, d'erreur sur les paquets ou d'erreur sur les bits après correction d'erreurs vers l'avant d'un signal de trafic reçu par le dispositif en utilisant un signal de trafic simulé.

5. Un système destiné à tester la sensibilité de récepteur d'un dispositif RF (à fréquences radioélectriques) **caractérisé par** :
un appareil d'essai de communications sans fil (320) selon l'une quelconque des Revendications 1 à 4,
un dispositif soumis à essai (DUT) (330), ledit dispositif soumis à essai étant agencé de façon à communiquer avec ledit appareil d'essai de communications sans fil (320) et de façon à recevoir le signal de trafic simulé de l'appareil d'essai de communications sans fil,
où ledit dispositif RF est soit un dispositif sans fil (130) ou une station de base (120) fonctionnant à l'intérieur d'un réseau sans fil (100).

6. Le système selon la Revendication 5 où ledit récepteur RF dudit dispositif RF est agencé sur une carte à circuits imprimés solidaire dudit dispositif sans fil (130), et où ledit appareil d'essai de communications sans fil (320) est agencé de façon à mener le test de sensibilité de récepteur en transmettant ledit signal de trafic simulé vers un port d'antenne solidaire de ladite carte à circuits imprimés.

7. Le système selon l'une quelconque des Revendications 5 ou 6 où ledit DUT (330) comprend un processeur de bande de base (310), et où ledit processeur de bande de base (310) comprend un estimateur de canal destiné à estimer ladite nouvelle quantité d'essai associée audit signal de trafic simulé.

8. Le système selon la Revendication 7 où ledit processeur de bande de base (310) comprend en outre une fonction destinée à convertir une valeur d'énergie corrélée en un rapport signal sur bruit (SNR) ou un rapport énergie par puce sur densité du signal brouilleur (Ec/Io).

9. Le système selon l'une quelconque des Revendications 5 à 8 où ledit appareil d'essai de communications sans fil (320) est connecté via un câble coaxial à une antenne ou un coupleur rayonnant placé dans une enceinte blindée renfermant ledit DUT (330), et où ledit DUT (330) est agencé de façon à recevoir ledit signal de trafic simulé via une transmission sans fil à partir de ladite antenne ou coupleur rayonnant, et où ledit appareil d'essai de communications sans fil (320) est agencé de façon à corriger l'affaiblissement sur le trajet associé à ladite transmission sans fil, audit câble coaxial ou à ladite antenne ou coupleur rayonnant.

10. Un procédé destiné à tester la sensibilité de récepteur d'un dispositif RF (à fréquences radioélectriques) **caractérisé par** :
la sélection d'une nouvelle quantité d'essai obtenue par un traitement de bande de base d'un signal de trafic reçu par le dispositif et possédant une relation prédéterminée et monotone avec le taux d'erreur sur les trames, le taux d'erreur sur les paquets ou le taux d'erreur sur les bits après correction d'erreurs vers l'avant du signal de trafic reçu par le dispositif,
l'exécution d'un test de sensibilité de récepteur sur ledit dispositif à fréquences radioélectriques en utilisant un signal de trafic simulé, la nouvelle quantité d'essai et un nouveau critère d'essai,
où le nouveau critère d'essai est déterminé à partir d'un critère respectif connu relatif au taux d'erreur sur les trames, au taux d'erreur sur les paquets ou au taux d'erreur sur les bits après correction d'erreurs vers l'avant et d'une relation monotone prédéterminée entre la nouvelle quantité d'essai et les taux respectifs d'erreur sur les trames, d'erreur sur les paquets ou d'erreur sur les bits après correction d'erreurs vers l'avant d'un signal de trafic reçu par le dispositif.

11. Le procédé selon la Revendication 10 où ladite nouvelle quantité d'essai est lue à partir d'un processeur de bande de base (310) associé audit dispositif RF.

12. Le procédé selon la Revendication 10 ou 11 où ledit nouveau critère d'essai correspond à un critère connu de taux d'erreur sur les trames de 0,5% avec une certitude de 95%.

13. Le procédé selon l'une quelconque des Revendications 10 à 12, où ladite nouvelle quantité d'essai comprend l'un quelconque des éléments suivants : rapport signal sur bruit, rapport signal sur brouillage, rapport énergie par puce sur densité du signal brouilleur (Ec/Io), rapport énergie par bit sur densité du signal brouilleur (Eb/Io), rapport énergie par symbole sur densité du signal brouilleur (Es/Io), rapport énergie par puce sur densité du bruit (Ec/No), rapport énergie par bit sur densité du bruit (Eb/No), rapport énergie par symbole sur densité du bruit (Es/No), rapport puissance de l'onde porteuse sur densité du bruit (C/No), énergie corrélée, amplitude corrélée, taux d'erreur sur les symboles et/ou taux d'erreur sur les bits avant correction d'erreurs vers l'avant.

14. Le procédé selon l'une quelconque des Revendications 10 à 13 comprenant en outre la relation prédéterminée entre la quantité d'essai et les taux respectifs d'erreur vers l'avant, d'erreur sur les paquets ou d'erreur sur les bits après correction d'erreurs vers l'avant d'un signal de trafic reçu par le dispositif en utilisant un signal de trafic simulé.

15. Le procédé selon la Revendication 14, où ladite opération de détermination de la relation prédéterminée comprend :
l'obtention d'une pluralité de mesures de taux d'erreur sur les trames et des valeurs correspondantes de ladite nouvelle quantité d'essai pour chaque puissance d'une pluralité de puissances de signal reçu,
le calcul pour chacun des niveaux de puissance de ladite pluralité de niveaux de puissance de signal reçu d'une valeur moyenne de ladite pluralité desdites mesures de taux d'erreur sur les trames,
la représentation graphique des moyennes de N groupes échantillons desdites valeurs correspondantes de ladite nouvelle quantité d'essai par rapport auxdites valeurs moyennes calculées de ladite pluralité desdites mesures de taux d'erreur sur les trames et la détermination de points de probabilité de niveau de certitude visé à partir de ladite représentation graphique,
l'interpolation entre lesdits points de probabilité de niveau de certitude visé pour différents niveaux de ladite pluralité de niveaux de puissance de signal reçu, et
la détermination d'un seuil d'acceptation/rejet pour ladite nouvelle quantité d'essai qui correspond à un critère d'acceptation/rejet associé audit critère connu de taux d'erreur sur les trames.

16. Le procédé selon l'une quelconque des Revendications 10 à 15 où ladite opération d'exécution d'un test de sensibilité de récepteur comprend :
l'attente d'un temps d'établissement défini,
l'obtention de N échantillons de ladite nouvelle quantité d'essai,
le calcul de la moyenne des N échantillons,
si ladite moyenne calculée est supérieure à un seuil spécifié N de nouvelle quantité d'essai, l'acceptation dudit dispositif sans fil,
sinon, si ladite moyenne calculée est inférieure audit seuil spécifié N de nouvelle quantité d'essai, l'obtention d'un nombre multiple de N échantillons additionnels et la répétition des opérations de calcul de la moyenne des N échantillons et l'acceptation dudit dispositif sans fil, et
après un nombre prédéfini d'itérations, le rejet dudit dispositif RF si ledit seuil de nouvelle quantité d'essai n'a pas été atteint.

17. Le procédé selon l'une quelconque des Revendications 10 à 15 où ladite opération d'exécution d'un test de sensibilité de récepteur comprend:
l'attente d'un temps d'établissement défini,
l'obtention de N échantillons de ladite nouvelle quantité d'essai,
le calcul de la moyenne des N échantillons,
si ladite moyenne calculée est supérieure à une limite supérieure associée à un seuil spécifié N de quantité d'essai, l'acceptation dudit dispositif sans fil,
sinon, si ladite moyenne calculée est inférieure à ladite limite supérieure associée audit seuil N de nouvelle quantité d'essai mais supérieure à une limite inférieure associée audit seuil N de quantité d'essai, l'obtention de 3N échantillons additionnels et la répétition des opérations de calcul de la moyenne des N échantillons et l'acceptation dudit dispositif sans fil où une moyenne calculée 4N est obtenue en attribuant auxdits N échantillons une moyenne pondérée de ¼ et auxdits 3N échantillons une moyenne pondérée de ¾, et
si ladite moyenne calculée 4N est inférieure à un seuil spécifié 4N de nouvelle quantité d'essai, le rejet dudit dispositif RF.

18. Le procédé selon la Revendication 14 où ladite nouvelle quantité d'essai est de l'énergie corrélée, et où ladite opération de détermination de la relation prédéterminée comprend :
l'obtention d'une pluralité de mesures FER et des valeurs correspondantes d'énergie corrélée pour chacune des puissances d'une pluralité de puissances de signal reçu,
le calcul d'une valeur moyenne de ladite pluralité de mesures FER obtenue pour chacune des puissances de ladite pluralité de puissances de signal reçu,
la représentation graphique de ladite pluralité de mesures FER par rapport auxdites moyennes FER calculées et la détermination du point de probabilité de 95% à partir de ladite représentation graphique,
la représentation graphique des moyennes des N groupes échantillons desdites valeurs correspondantes d'énergie corrélée par rapport auxdites moyennes FER calculées et la détermination des points de probabilité de 95% à partir de ladite représentation graphique,
l'interpolation entre les points de probabilité de 95% pour différents niveaux de ladite pluralité de niveaux de puissance de signal reçu, et
la détermination d'un seuil d'énergie corrélée pour un FER de 0,5% avec une certitude de 95%.

19. Le procédé selon la Revendication 18 où ladite opération d'exécution d'un test de sensibilité de récepteur comprend :
l'attente d'un temps d'établissement défini,
l'obtention de N échantillons de ladite énergie corrélée,
le calcul de la moyenne des N échantillons,
si ladite moyenne calculée est supérieure à un seuil N spécifié d'énergie corrélée, l'acceptation dudit dispositif sans fil, et
sinon, si ladite moyenne calculée est inférieure audit seuil N spécifié d'énergie corrélée, l'obtention d'un nombre multiple de N échantillons additionnels et la répétition des opérations de calcul de la moyenne des N échantillons et l'acceptation dudit dispositif sans fil, et
après un nombre prédéfini d'itérations, le rejet dudit dispositif RF si ledit seuil d'énergie corrélée n'a pas été atteint.

20. Le procédé selon la Revendication 18 où ladite opération d'exécution d'un test de sensibilité de récepteur comprend :
l'attente d'un temps d'établissement défini,
l'obtention de N échantillons de ladite énergie corrélée,
le calcul de la moyenne des N échantillons,
si ladite moyenne calculée est supérieure à une limite supérieure associée à un seuil N spécifié d'énergie corrélée l'acceptation dudit dispositif sans fil, et
sinon, si ladite moyenne calculée est inférieure à ladite limite supérieure associée audit seuil N spécifié d'énergie corrélée mais supérieure à une limite inférieure associée audit seuil N spécifié d'énergie corrélée, l'obtention de 3N échantillons additionnels et la répétition des opérations de calcul de la moyenne des N échantillons et l'acceptation du dispositif sans fil où une moyenne calculée 4N est obtenue en attribuant auxdits N échantillons une moyenne pondérée de ¼ et auxdits 3N échantillons une moyenne pondérée de ¾, et
si ladite moyenne calculée 4N est inférieure à un seuil spécifié 4N d'énergie corrélée, le rejet dudit dispositif RF.

21. Le procédé selon l'une quelconque des Revendications 18 à 20, où l'opération d'obtention d'une pluralité de mesures FER et des valeurs correspondantes d'énergie corrélée comprend en outre l'opération de conversion desdites valeurs d'énergie corrélée en des valeurs correspondantes de rapport signal sur bruit (SNR) ou d'Ec/Io, et où les opérations d'acceptation et/ou de rejet dudit dispositif sans fil sont exécutées au moyen desdites valeurs de SNR ou d'Ec/Io mises en correspondance.

22. Le procédé selon la Revendication 20, où l'opération d'obtention de N échantillons de ladite énergie corrélée comprend en outre l'opération de conversion desdites valeurs d'énergie corrélée vers des valeurs correspondantes de rapport signal sur bruit (SNR) ou d'Ec/Io, et où les opérations de calcul de la moyenne des N échantillons et d'acceptation et/ou de rejet dudit dispositif sans fil sont exécutées au moyen desdites valeurs de SNR ou d'Ec/Io mises en correspondance.

23. Un support lisible par ordinateur comprenant un moyen de code de programme exécutable par un processeur de l'appareil d'essai de communications sans fil (320) selon l'une quelconque des Revendications 1 à 4 destiné à la mise en oeuvre du procédé selon l'une quelconque des Revendications 10 à 22.
